Europäisches Patentamt

European Patent Office

Office européen des brevets

(19)

(11) Numéro de publication: **0 005 670**
**B1**

(12) **FASCICULE DE BREVET EUROPEEN**

(45) Date de publication du fascicule de brevet: **29.04.81**

(21) Numéro de dépôt: **79400305.3**

(22) Date de dépôt: **15.05.79**

(51) Int. Cl.³: **F 28 F  11/00,  F 16 L  55/16,
B 23 K  11/30**

(54) Dispositif pour colmater une fuite dans une portion droite d'un tube d'échangeur de chaleur.

(30) Priorité: **17.05.78 FR  7814545**

(43) Date de publication de la demande:
**28.11.79 Bulletin 79/24**

(45) Mention de la délivrance du brevet:
**29.04.81 Bulletin 81/17**

(84) Etats Contractants Désignés:
**BE DE GB IT SE**

(56) Documents cités:
**FR - A - 2 282 097
GB - A - 1 166 898**

(73) Titulaire: **COMMISSARIAT A L'ENERGIE
ATOMIQUE Etablissement de Caractère
Scientifique Technique et Industriel
B.P. 510
F-75752 Paris Cedex 15 (FR)**

(72) Inventeur: **Vrillon, Bernard
15, rue des Ecoles
F-91320 Wissous (FR)**

(74) Mandataire: **Mongredien, André et al,
c/o Brevatome 25, rue de Ponthieu
F-75008 Paris (FR)**

Courier Press, Leamington Spa, England.

## Dispositif pour colmater une fuite dans une portion droite d'un tube d'échangeur de chaleur

La présente invention est relative à un dispositif destiné assurer le colmatage ou le bouchage étanche d'une fuite accidentelle survenant sur un des tubes du faisceau d'un échangeur de chaleur, notamment du type générateur de vapeur, ces tubes étant de façon usuelle solidarisés à une ou à leurs deux extrémités, respectivement dans le cas de tubes droits ou dans le cas de tubes en U, avec une plaque à tubes, partageant l'intérieur d'une enveloppe délimitant l'échangeur en deux régions, la première étant réservée à l'admission d'un fluide primaire à l'intérieur des tubes après traversée de la plaque et la seconde au passage d'un fluide secondaire baignant extérieurement les tubes et échangeant des calories avec le fluide primaire à travers la paroi de ces tubes.

On conçoit aisément que, dans le cours du fonctionnement de tels générateurs, en particulier lorsqu'ils sont soumis à des contraintes mécaniques et thermiques notables par suite de la nature ou des températures des fluides en présence, risquent de se produite, à la suite des vibrations, usures, corrosions ou autres, des percements ou ruptures de certains de ces tubes, avec des conséquences extrêmement préjudiciables. Notamment, dans certaines installations nucléaires, le fluide primaire, radioactif, peut, en cas de percement d'un ou de plusieurs tubes, contaminer le fluide secondaire; par ailleurs, toujours dans ce type d'installation, le fluide primaire, qui peut être constitué par un métal liquide, réagit alors violemment avec le fluide secondaire constitué par de l'eau, la réaction produite conduisant rapidement, en fonction du débit de la fuite, à un endommagement des tubes voisins, en rendant l'échangeur totalement inutilisable.

De façon classique, la méthode utilisée en cas de percement d'un tube dans le faisceau, une fois le défaut détecté, consiste à boucher ce tube à ses deux extrémités, pour le mettre entièrement hors service. Toutefois, on conçoit que, si le nombre de tubes endommagé devient important, il en résulte une limitation notable de la surface d'échange disponible et une perte de rendement sensible de l'installation conduisant à la limite, à la mise hors service de l'échangeur tout entier.

La présente invention a pour objet un dispositif évitant, en cas de fuite sur un tube quelconque du faisceau d'un échangeur et après repérage du tube comportant la fuite, d'éliminer ce tube en assurant au contraire le bouchage localisé de la fuite, le tube en cause pouvant être ainsi maintenu en fonctionnement après une réparation simple, efficace et facilement mise en oeuvre.

A cet effet, le dispositif considéré se caractérise en ce qu'il comporte un mandrin axial en un matériau bon conducteur électrique, sur lequel sont enfilées des rondelles métalliques de révolution à profil conique séparées par des pastilles cylindriques isolantes, une tête isolante fixée à une extrémité du mandrin axial et un support également isolant monté à l'extrémité opposée à ladite tête, ledit support étant librement traversé par une partie filetée dudit mandrin coopérant avec un écrou en appui sur le support et permettant d'exercer sur les rondelles coniques une tension initiale réglable telle que lesdites rondelles soient appliquées par leurs bords périphériques externes contre un manchon cylindrique mince, coaxial au mandrin et dont le diamètre externe est légèrement inférieur au diamètre interne du tube comportant la fuite à colmater, des moyens pour introduire le support dans le manchon puis le manchon dans le tube afin de disposer ledit manchon en regard d'une région comportant ladite fuite, des moyens pour exercer sur ledit mandrin un déplacement axial par rapport audit support tel que les rondelles coniques subissent un écrasement maximal en passant ainsi d'un profil conique à un profil plus écrasé, lesdites rondelles exerçant chacune sur ledit manchon un effort radial appliquant ledit manchon en contact étroit avec ledit tube selon autant de lignes circulaires que de rondelles, et des moyens pour faire passer un courant électrique à travers successivement, le mandrin, les rondelles, le manchon et le tube afin de réaliser selon lesdites lignes circulaires des soudures par résistance du tube et du manchon.

On réalise ainsi une obturation locale parfaitement étanche du tube au niveau de la fuite qu'il comporte, par soudure de manchon contre le tube selon au moins deux lignes circulaires, mais de préférence selon un nombre supérieur de telles lignes, la pression exercée par les rondelles à leur écrasement maximal permettant d'assurer ces soudures dans des conditions optimales. Le manchon utilisé pour obturer le tube est de préférence un tube mince, en un matériau soit identique, soit différent de celui du tube percé, le diamètre extérieur de ce manchon étant légèrement inférieur au diamètre intérieur du tube, de façon à ce que, compte tenu des tolérances de fabrication, il puisse être facilement déplacé sans coincement dans la partie droite de ce tube.

D'autres caractéristiques d'un dispositif de colmatage établi conformément à l'invention apparaîtront encore à travers la description qui suit d'un exemple de réalisation, donné à titre indicatif et non limitatif, en référence aux dessins annexés sur lesquels;

— la Fig. 1 est une vue schématique en coupe axiale partielle d'un générateur de vapeur utilisant un dispositif de colmatage selon l'invention;

— la Fig. 2 est une vue en coupe axiale à plus grande échelle d'une parties d'un des tubes de l'échangeur et d'un dispositif selon l'invention, monté à l'intérieur dudit tube;

— la Fig. 3 illustre une variante de réalisation d'un détail du dispositif de la Fig. 2 où les rondelles coniques et l'axe central sont monobloc;

— la Fig. 4 est une vue en coupe illustrant la structure des éléments prolongeant le mandrin axial et le support du dispositif selon la Fig. 2, permettant de réaliser la mise en place et l'immobilisation d'un manchon d'étanchéité sur la surface interieure du tube à colmater.

— la Fig. 5 montre à plus grande échelle le manchon après se mise en place sur la surface intérieure du tube à colmater.

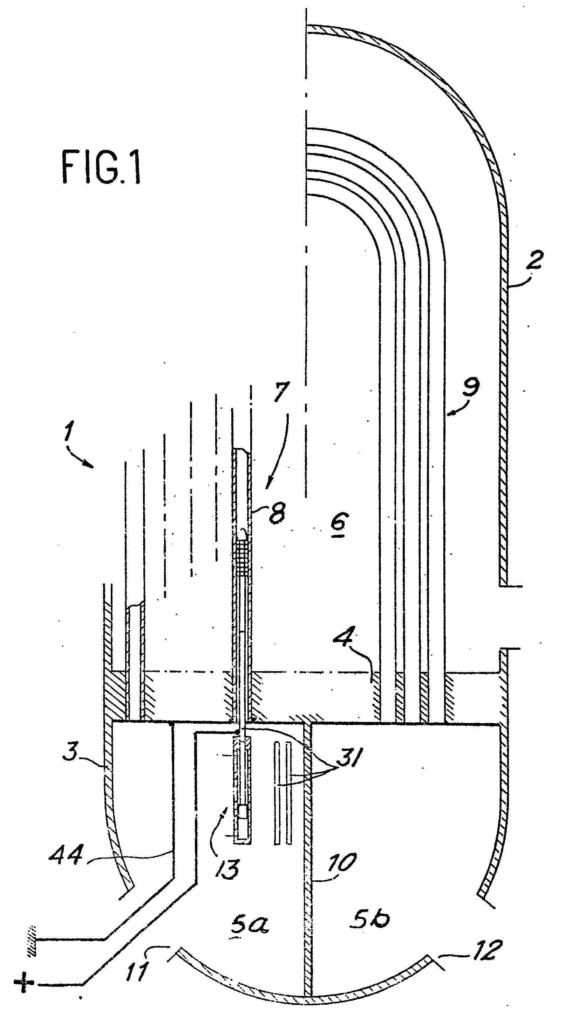

Sur la Fig. 1, la référence 1 désigne schématiquement l'ensemble d'un générateur de vapeur de structure parfaitement classique, constitué notamment d'une virole cylindrique latérale 2 et d'un fond inférieur hémisphérique 3, raccordés l'un à l'autre par l'intermédiaire d'une plaque transversale horizontale 4 ou plaque à tubes. Cette dernière délimite dans le générateur deux régions respectivement 5a,5b et 6, la première étant réservée à l'entrée et la sortie d'un fluide primaire, tandis que la seconde est traversée par un fluide secondaire échangeant des calories avec le premier à travers la paroi des tubes 7 d'un faisceau. Ces tubes 7 comportent, dans l'exemple de réalisation schématiquement représenté, un profil en U, avec deux jambes droites parallèles, respectivement 8 et 9, raccordées à la plaque à tubes 4 dans deux régions opposées de celle-ci. La région 5a,5b située sous la plaque à tubes est séparée transversalement, sensiblement dans son milieu, par une cloison verticale 10, délimitant deux collecteurs voisins, respectivement 5a et 5b, permettant au fluide primaire introduit dans le collecteur 5a par une tubulure d'entrée 11 et évacué hors du collecteur 5b par une tubulure de sortie 12, d'alimenter et de recueillir le débit à travers les jambes 8 et 9 du fluide primaire. Les tubes 7 sont baignés extérieurement par le fluide secondaire présent dans la région 6, introduit dans cette dernière par d'autres conduits (non représentés), la vapeur produite étant extraite de l'échangeur par une autre tubulure (également non représentée).

Conformément à l'invention, le générateur de vapeur ainsi conçu est associé à un dispositif, désigné dans son ensemble par la référence 13, permettant, par l'intérieur de chacun des tubes 7 du faisceau, d'assurer le colmatage d'un de ces tubes, en cas de repérage préalable d'une fuite dans ce tube, fuite conduisant à une dispersion de fluide primaire dans le fluide secondaire avec les conséquences graves qui peuvent en résulter, soit du fait de la nature particulière respective de ces fluides, soit de leurs différences de température et de pression, soit encore pour d'autres causes.

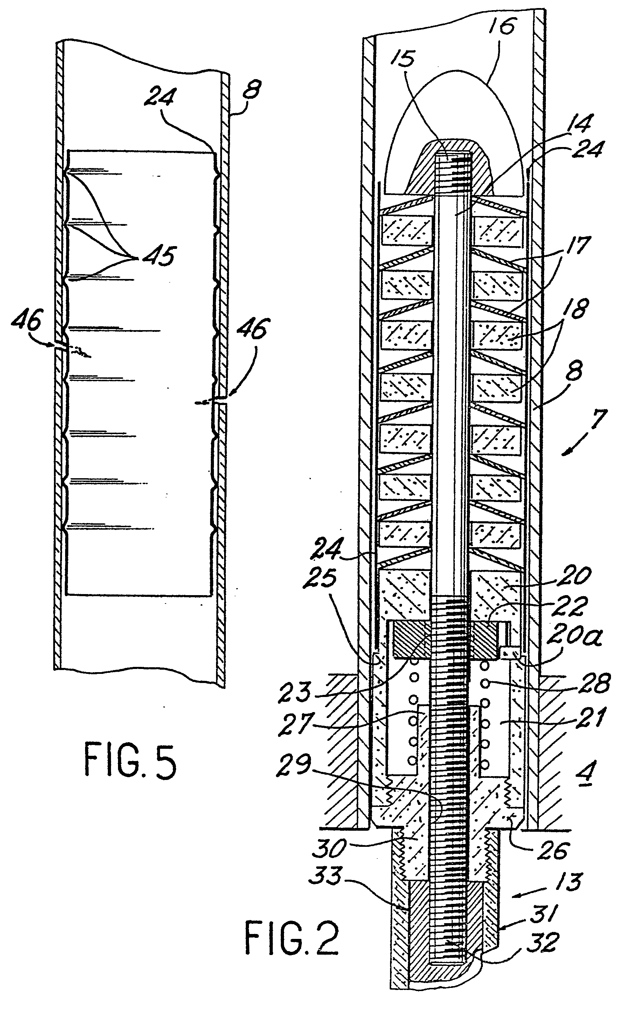

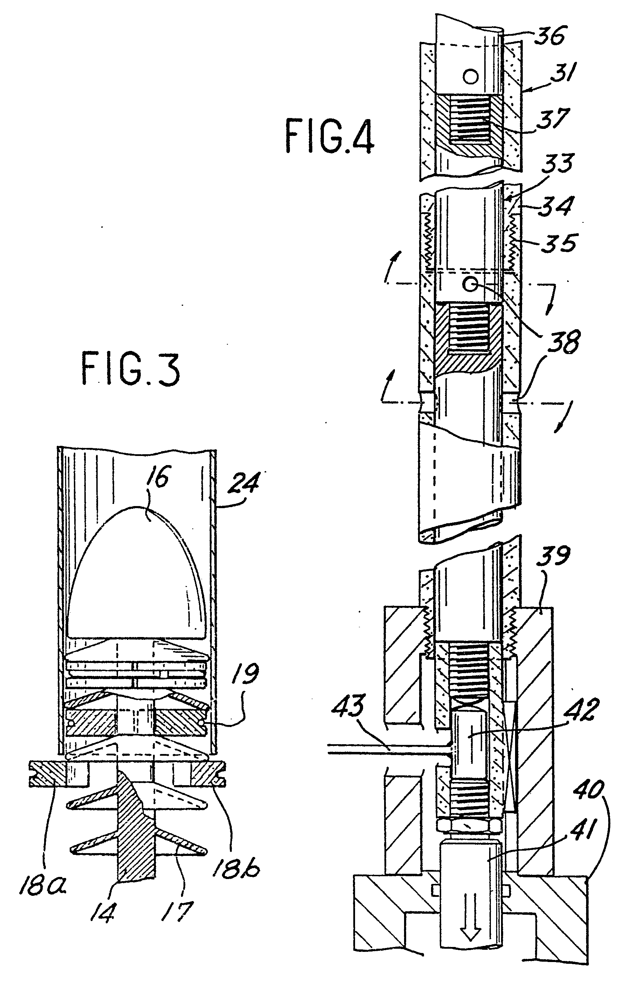

La Fig. 2 illustre à plus grande échelle le détail de la réalisation du dispositif 13, permettant d'assurer ce colmatage d'un des tubes 7 du faisceau dans l'une ou l'autre de ses jambes rectilignes 8 ou 9, par exemple dans la jambe 8 raccordée au collecteur d'entrée 5a. Ce dispositif se compose principalement d'un mandrin axial 14 en un matériau bon conducteur de l'électricité, fileté en 15 à son extrémité supérieure et sur lequel est vissée une tête isolante 16, ayant de préférence la forme d'une ogive afin de faciliter la pénétration du dispositif à l'intérieur du tube à partir du collecteur 5a. Sur le mandrin 14 sont préalablement enfilées des rondelles coniques 17, métalliques, de préférence en cuivre ou en un alliage de cuivre approprié, ces rondelles 17, du genre "rondelles Belleville" étant en contact par leurs sommets avec le mandrin axial 14. Entre chacune de ces rondelles 17 sont intercalées de pastilles cylindriques 18, en un matériau isolant électrique, par exemple en céramique ou bien en un métal recouvert d'un revêtement céramique, ces pastilles pouvant être réalisées d'une seule pièce et enfilées au montage sur le mandrin. Des le cas où le mandrin et les parties coniques élastiques forment une seule pièce, les pastilles peuvent être constituées de deux parties demi-circulaires 18a et 18b (Fig. 3) accolées l'une à l'autre et maintenues en contact contre le mandrin axial 14 par un jonc ou autre moyen de liaison extérieur 19.

A son extrémité opposée à la tête 16 et à l'empilement des rondelles 17 et pastilles 18, le mandrin 14 est associé à un support 20, également en matériau isolant électrique, délimitant autour du mandrin 14 le traversant librement une cavité 21. Sous ce support 20 est monté un écrou 22, en prise sur une partie filetée 23 du mandrin 14, la coopération du mandrin et de cet écrou immobilisé en rotation par un ergot 20a, permettant par vissage du mandrin, d'assurer un certain serrage de la tête 16 en rapprochement vers le support 20 et par suite un écrasement limité des rondelles coniques 17, tel que ces dernières assurent, par leurs bords périphériques opposés au mandrin 14, un effort de maintien sur un manchon cylindrique mince 24, en métal préalablement graissé et décapé et éventuellement sur sa paroi externe d'un revêtement électrolytique, ce manchon étant enfilé sur ces rondelles qu'il entoure et en appui par son extrémité inférieure contre un épaulement 25 prévu dans le support 20. Grâce à ces dispositions, l'ensemble constitué par le mandrin 14, les rondelles 17 et le manchon 24, constitue un tout d'un seul tenant, susceptible d'être facilement engagé avec le support et les éléments qui lui sont liés à l'intérieur du tube 7 dans sa jambe rectiligne 8, de manière à amener le manchon 24 en regard de n'importe quelle région de cette jambe rectiligne comportant une fuite à colmater, préalablement localisée.

A son extrémité opposée à l'écrou 22, le support 20 comporte un fond 26, muni intérieurement d'une douille 27 traversée par le mandrin 14 et servant d'organe de guidage pour un ressort 28 en appui d'une part contre l'écrou 22 et, d'autre part, contre ce fond 26, ce ressort permettant d'exercer en permanence une action repoussant cet écrou 22 contre le support 20. Le fond 26 comporte également un alésage 29 pour le passage du mandrin et un embout fileté 30 sur lequel est raccordé un fourreau prolongateur 31 également en un matériau isolant électrique. De la même manière, l'extrémité filetée 32 du mandrin conducteur 14 terminant ce dernier à sa partie basse, est en prise sur une tige d'actionnement 33, apte à coulisser dans le fourreau 31, en exerçant un effort vers le bas à l'encontre du ressort 28.

Sur la Fig. 4 apparaissent plus spécialement le fourreau 31 et la tige d'actionnement 33, constitués chacun d'une série d'éléments successifs raccordés bout à bout, notamment pour permettre un montage dans le collecteur 5a. Pour le fourreau 31, ces éléments sont constitués de tronçons de tubes creux 34, vissés l'un dans l'autre par des parties filetées coopérantes 35. De la même manière, la tige d'actionnement 33 est constituée de tronçons pleins conducteurs 36, vissés successivement les uns dans les autres par des filetages 37 avantageusement revêtus d'un film métallique, par exemple d'or, assurant une bonne conductivité électrique. Des trous transversaux 38 ménagés dans les éléments successifs du fourreau et de la tige facilitent leur vissage mutuel au fur et à mesure de leur montage.

Le fourreau 31 ainsi constitué est solidarisé à son extrémité inférieure, d'un boîtier de connexion 39 à l'extrémité inférieure duquel est rapporté le corps 40 d'un vérin de commande hydraulique ou pneumatique monté dans le collecteur de fluide primaire. Le piston 41 de ce vérin, en se débattant à l'intérieur du boîtier 39, actionne la tige 33, le mouvement de cette tige vers le bas se transmettant au mandrin 14 qui, de ce fait, est tiré en direction de son support 20, avec compression maximale des rondelles coniques 17. Celles-ci sont dès lors aplaties par le déplacement de la tête 16 et, par leurs bords périphériques exerçant sur le manchon 24 qui les entoure un effort radial réalisant au niveau de chacune de ces rondelles une ligne circulaire en saillie vers la paroi interne du tube et en contact étroit avec celle-ci.

Par ailleurs, entre le piston 41 du vérin de commande et l'extrémité inférieure de la tige 33 est montée une pièce de connexion électrique 42, permettant de relier celle-ci par un conducteur 43 à un générateur de courant (non représenté), le courant fourni passant dans la tige puis dans le mandrin 14 et enfin à travers les rondelles 17 vers le manchon 24 et le tube 7 jusqu'à la plaque à tubes 4. Celle-ci est reliée par un autre conducteur 44 à la masse (voir Fig. 1).

La Fig. 5 montre à plus grande échelle la forme et la répartition des lignes circulaires 45 créées par les rondelles 17 à l'intérieur du manchon 24 et l'appui de ces lignes circulaires contre la partie rectiligne 8 du tube 7, comportant un ou plusieurs percements ou trous 46 à obturer. Le passage du courant à travers le mandrin 14, les rondelles 17, le manchon 24 et le tube 7 permet alors d'assurer, au niveau de ces lignes circulaires, une soudure efficace par résistance du manchon sur le tube et ainsi de rapporter sur ce dernier un élément de colmatage, assurant une étanchéit parfaite au niveau des percements 46 de ce dernier, l'étanchéité étant d'autant meilleure que le nombre de rondelles 17 et par suite de lignes circulaires 46 selon lesquelles sont effectuées les soudures, est plus élevé. Dans tous les cas, on obtient des soudures par resistance parfaites grâce à la forte pression exercée par les rondelles portées par le mandrin, isolées les unes des autres par les pastilles montées entre ces rondelles. A noter, en outre, qu'en service la pression interne du fluide primaire dans les tubes étant en général supérieure à celle de la pression du fluide secondaire à l'extérieur, aucun problème n'est à craindre quant à une éventuelle rupture des soudures, le manchon étant au contraire appliqué par la pression différentielle contre la surface interne du tube.

Bien entendu, il va de soi que l'invention ne se limite pas à l'exemple de réalisation plus spécialement décrit et représenté; elle en embrasse au contraire toutes les variantes. En particulier, il est évident que le dispositif de colmatage selon l'invention peut être utilisé avec d'autres types d'échangeurs de chaleur, notamment à tubes droits et non plus à tubes en U. Dans tous les cas, le dispositif est introduit dans chaque tube et amené en regard de la région de cellui-ci comportant une fuite, grâce au montage d'autant d'éléments prolongateurs successifs que nécessaires sur le fourreau et la tige d'actionnement, ces éléments successifs introduits un à l'intérieur d'un collecteur de fluide primaire présentant chacun une hauteur compatible avec les dimensions de ce collecteur. Le générateur de courant fournissant l'énergie nécessaire au soudage du manchon sur le tube est naturellement dimensionné en fonction de l'éloignement des soudures à effectuer par rapport au collecteur, le matériau des rondelles étant en outre, choisi de telle sorte qu'il ne se soude pas sur le manchon, non plus que sur le mandrin axial. Par ailleurs, dans le cas où on voudrait utiliser le dispositif à l'aide d'une machine automatique du type robot d'intervention, les fourreaux 31 et les tiges d'actionnement 33 pourraient être remplacés respectivement par des éléments flexibles; on pourraît alors reporter à l'extérieur des collecteurs de fluide primaire le vérin de commande en passant ces éléments par les tubulures 11 ou 12.

**Revendications**

1. Dispositif pour colmater une fuite dans une portion droite (8, 9) d'un tube (8) d'échangeur de chaleur, caractérisé en ce qu'il comporte un mandrin (14) axial en un matériau bon conducteur électrique, sur lequel sont enfilées des rondelles (17) métalliques de révolution à profil conique séparées par des pastilles cylindriques (18) isolantes, une tête isolante (16) fixée à une extrémité du mandrin axial et un support (20) également isolant monté à l'extrémité opposée à ladite tête, ledit support étant librement traversé par une partie filetée (23) dudit mandrin coopérant avcec un écrou (22) en appui sur le support et permettant d'exercer sur les rondelles coniques une tension initiale réglable telle que lesdites rondelles soient appliquées par leurs bords périphériques externes contre un manchon cylindrique mince (24), coaxial au mandrin et dont le diamètre externe est légèrement inférieur au diamètre interne du tube comportant la fuite à colmater, des moyens (31, 33) pour introduire le support dans le manchon puis le manchon dans le tube afin de disposer ledit manchon en regard d'une région (46) comportant ladite fuite, des moyens (40, 41) pour exercer sur ledit mandrin un déplacement axial par rapport audit support tel que les rondelles coniques subissent un écrasement maximal en passant ainsi d'un profil conique à un profil plus écrasé, lesdites rondelles exerçant chacune sur ledit manchon un effort radial appliquant ledit manchon en contact étroit avec ledit tube selon autant de lignes circulaires (45) que de rondelles et des moyens (42, 43, 44) pour faire passer un courant électrique à travers successivement le mandrin, les rondelles, le manchon et le tube afin de réaliser selon lesdits lignes circulaires des soudures par résistance du tube et du manchon.

2. Dispositif selon la revendication 1, caractérisé en ce que le manchon (24) est un tube mince en un matériau soit identique, soit différent de celui du tube (8), le manchon (24) pouvant être facilement déplacé sans coincement dans la partie droite de ce tube (8).

3. Dispositif selon la revendication 1, caractérisé en ce que le support d'appui de l'écrou de réglage est constitué par un boîtier apte à coulisser avec le manchon dans le tube, ledit boîtier étant prolongé par un fourreau cylindrique (31) isolant dans lequel se déplace une tige d'actionnement (33) conductrice de l'électricité, solidaire de l'extrémité inférieure du mandrin.

4. Dispositif selon la revendication 3, caractérisé en ce que le fourreau isolant et la tige d'actionnement conductrice sont formés d'éléments successifs (34, 36) aptes à être respectivement raccordés bout à bout par vissage ou autre moyen d'assemblage, pour assurer la longueur d'introduction nécessaire dans le tube, afin d'amener le manchon en regard d'une région comportant une fuite à colmater.

5. Dispositif selon la revendication 4, caractérisé en ce que les éléments successifs (34, 36) de la tige d'actionnement et du fourreau isolant sont flexibles.

6. Dispositif selon la revendication 4, caractérisé en ce que les éléments successifs (34, 36) de la tige d'actionnement comportent des parties de liaison respectivement filetées et taraudées coopérantes, dont les filets sont recouverts d'un revêtement métallique à haute conductibilité électrique, améliorant le passage du courant électrique d'un élément au suivant.

7. Dispositif selon la revendication 1, caractérisé en ce que les moyens pour exercer sur le mandrin un déplacement par rapport au support sont constitués par un vérin hydraulique ou pneumatique, dont le piston (41) est raccordé au mandrin par l'intermédiaire de la tige d'actionnement et dont le corps (40) est immobilisé par rapport au fourreau isolant prolongeant le support.

8. Dispositif selon la revendication 7, caractérisé en ce que le vérin est monté dans un des collecteurs (5a, 5b) de fluide primaire, délimité dans l'enveloppe de l'échangeur sous la plaque portant les tubes, la longueur de chacun des éléments successifs du fourreau ou de la tige d'actionnement étant compatible avec la hauteur dudit collecteur.

9. Dispositif selon la revendication 1, caractérisé en ce que le manchon cylindrique (124) est réalisé en un matériau métallique préalablement dégraissé et décapé, muni d'un revêtement électrolytique sur sa paroi externe, destiné à faciliter le soudage par résistance.

10. Dispositif selon la revendication 1, caractérisé en ce que les moyens pour faire passer un courant électrique pour le soudage du manchon cylindrique sur le tube sont constitués par un générateur de courant dont un pôle est raccordé au mandrin par l'intermédiaire de la tige d'actionnement, l'autre pôle étant relié à la masse à travers le tube et la plaque à tubes.

11. Dispositif selon la revendication 1, caractérisé en ce que les rondelles coniques (17) sont réalisées en cuivre ou en un alliage de cuivre et sont du genre rondelles Belleville et en ce que les parties coniques élastiques et le manchon sont en une seule pièce.

12. Dispositif selon la revendication 1, caractérisé en ce que les pastilles isolantes (18) montées entre les rondelles coniques sont réalisées en une ou deux parties accolées l'une à l'autre, et sont constituées en un matériau non susceptible de se souder au mandrin et/ou au manchon.

13. Dispositif selon la revendication 12, caractérisé en ce que les pastilles (18) sont réalisées en un matériau céramique ou en un métal recouvert d'un revêtement céramique.

**Claims**

1. A device for plugging a leak in a straight portion (8, 9) of a heat-exchanger tube (8), characterised in that it comprises an axial mandrel (14) of an electrically conductive material onto which are threaded metallic collars (17) of revolution, conical in profile, separated by insulating cylindrical inserts (18), an insulating head (16) fixed to one end of the axial mandrel and an insulating support (20) arranged at the end opposite to said head, said support being freely traversed by a screw-threaded part (23) of said mandrel co-operating with a nut (22) resting on the support and enabling an adjustable initial tension to be applied to the conical collars so that the said collars are applied by their outer peripheral edges to a thin cylindrical sleeve (24) which is coaxial with the mandrel and of which the external diameter is slightly smaller than the internal diameter of the tube with the leak to be plugged, means (31, 33) for introducing the support into the sleeve and then the sleeve into the tube so as to dispose the said sleeve opposite a region (46) with the said leak, means (40, 41) for imparting to said sleeve an axial displacement in relation to said support so that the conical collars undergo maximal flattening and thus change from a conical profile to a flatter profile, each of said collars applying to said sleeve a radial force which brings said sleeve into close contact with said tube along as many circular lines (45) as there are collars and means (42, 43, 44) for successively passing an electrical current through the mandrel, the collars, the sleeve and the tube so as to establish resistance welds of the tube and the sleeve along said circular lines.

2. A device as claimed in Claim 1, characterised in that the sleeves (24) is a thin tube of a material which is either the same as or different from the constituent material of the tube (8), the sleeve (24) being able to be readily displaced without jamming in the straight part of the tube (8).

3. A device as claimed in Claim 1, characterised in that the support for the adjustment nut is formed by a casing adapted to slide with the sleeve in the tube, said casing being extended by an insulating cylindrical sleeve (31) in which moves an electrically conductive actuating rod (33) fixed to the lower end of the mandrel.

4. A device as claimed in Claim 3, characterised in that the insulating sleeve and the conductive actuating rod are formed by successive elements (34, 36) designed to be respectively joined end-to-end by screwing or other means of assembly to ensure the necessary length of introduction into the tube so as to bring the sleeve opposite a region containing a leak to be plugged.

5. A device as claimed in Claim 4, characterised in that the successive elements (34, 36) of the actuating rod and the insulating sleeve are flexible.

6. A device as claimed in Claim 4, characterised in that the successive elements (34, 36) of the actuating rod comprise co-operating connecting parts respectively screw-threaded and bored, of which the screwthreads are coated with a layer of metal of high electrical conductivity to improve the passage of the electrical current from one element to the next.

7. A device as claimed in Claim 1, characterised in that the means for imparting to the mandrel a movement in relation to the support are formed by a hydraulic or pneumatic jack of which the stem (41) is connected to the mandrel by the actuating rod and of which the body (40) is fixed in relation to the insulating sleeve extending the support.

8. A device as claimed in Claim 7, characterised in that the jack is mounted in one of the primary fluid collectors (5a, 5b) delimited in the envelope of the exchanger under the plate carrying the tubes, the length of each of the successive elements of the sleeve or the actuating rod being compatible with the height of said collector.

9. A device as claimed in Claim 1, characterised in that the cylindrical sleeve (24) is made of a previously degreased and cleaned metal provided on its outer wall with an electrolytic coating intended to facilitate resistance welding.

10. A device as claimed in Claim 1, characterised in that the means for passing an electrical current for welding the cylindrical sleeve to the tube are formed by a current generator of which one terminal is connected to the mandrel through the actuating rod, the other terminal being connected to earth through the tube and the tube-carrying plate.

11. A device as claimed in Claim 1, characterised in that the conical collars (17) are made of copper or a copper alloy and are of the Belleville collar type and in that the elastic conical parts and the sleeve are in one piece.

12. A device as claimed in Claim 1, characterised in that the insulating inserts (18) arranged between the conical collars consist of one or two parts joined to one another and are made of a material which cannot be welded to the mandrel and/or to the sleeve.

13. A device as claimed in Claim 12, characterised in that the inserts (18) are made of a ceramic material or a ceramic-coated metal.

**Patentansprüche**

1. Vorrichtung zum Abdichten eines Lecks in einem geraden Abschnitt (8, 9) eines Rohres (8) eines Wärmeaustauschers, dadurch gekennzeichnet, daß vorgesehen sind ein Längsdorn (14) aus einem elektrisch gut leitenden Material, auf dem metallene, voneinander durch zylinderförmige, isolierende Plättchen (18) getrennte Kreisscheiben (17) mit konischem Profil aufgereiht sind, einen an einem Ende des Längsdorns befestigten, isolierenden Kopf (16) und eine an dem dem Kopf gegenüberliegenden Ende befestigte, ebenfalls isolierende Stütze (20), wobei die Stütze von einem Gewindeabschnitt (23) des Dornes frei durchquert wird, der mit einer sich an der Stütze abstützenden Mutter (22) zusammenwirkt und ermöglicht, eine anfangs einnstellbare Zugspannung auf die konischen Scheiben auszuüben, so daß Scheiben mit ihren äußeren Umfangsrändern gegen eine zylinderförmige, dünne Hülse (24) drückbar sind, die koaxial zu dem Dorn verläuft und deren Außendurchmesser etwas kleiner als der Innendurchmesser der Röhre mit dem abzudichtenden Leck ist, Mittel (31, 33) zum Einführen der Stütze in die Hülse und dann die Hülse in das Rohr, um diese Hülse bezüglich eines Bereiches (46) anzuordnen, wo sich das Leck befindet, Mittel (40, 41), um auf den Dorn eine axiale Verschiebung in bezug auf die Stütze derart auszuüben, daß die konischen Scheiben eine maximale Stauchung erfahren und so von einem konischen Profil zu einem stärker gestauchten Profil übergehen, wobei jede Scheibe auf die Hülse eine radiale Kraft ausübt, wodurch die Hülse in enge Berührung mit dem Rohr an so vielen Kreislinien (45) wie Scheiben gedrückt wird, und Mittel (42, 43, 44) um einen elektrischen Strom aufeinanderfolgend durch den Dorn, die Scheiben, die Hülse und das Rohr hindurchzuleiten, um längs dieser Kreislinien eine Widerstandsschweißung zwischen dem Rohr und der Hülse durchzuführen.

2. Vorrichtung nach Anspruch 1, dadurch gekennzeichnet, daß die Hülse (24) ein dünnes Rohr aus einem entweder gleichen oder unterschiedlichen Material wie das des Rohres (8) ist, wobei die Hülse (24) leicht ohne Klemmen in dem geraden Abschnitt des Rohres (8) verschiebbar ist.

3. Vorrichtung nach Anspruch 1, dadurch gekennzeichnet, daß die Stütze zur Abstützung der Einstellmutter als ein gemeinsam mit der Hülse in dem Rohr verschiebbares Gehäuse ausgebildet ist und daß das Gehäuse durch eine zylinderförmige, isolierende Hülse (31) verlängert ist, in der sich eine elektrisch leitende Betätigungsstange (33) verschiebt, die mit dem unteren Ende des Dornes kraftschlüssig verbunden ist.

4. Vorrichtung nach Anspruch 3, dadurch gekennzeichnet, daß die isolierende Hülse und die leitende Betätigungsstange als aufeinanderfolgende Elemente (34, 36) ausgebildet sind, die endweise durch Schrauben oder ein anderes Verbindungsmittel miteinander verbindbar sind, um die notwendige Länge zum Einführen in das Rohr sicherzustellen und die Hülse in bezug zu einem Bereich zu bringen, der ein abzudichtendes Leck aufweist.

5. Vorrichtung nach Anspruch 4, dadurch gekennzeichnet, daß die aufeinanderfolgenden Elemente (34, 36) der Betätigungsstange und der isolierenden Hülse flexibel sind.

6. Vorrichtung nach Anspruch 4, dadurch gekennzeichnet, daß die aufeinanderfolgenden Elemente (34, 36) der Betätigungsstange Verbindungsabschnitte mit zusammenwirkenden entsprechenden Außen- und Innengewinden aufweisten, wobei die Außengewinde mit einem metallischen Überzug großer elektrischer Leitfähigkeit bedeckt sind, wodurch der Durchgang des elektrischen Stromes von einem zum folgenden Element verbessert wird.

7. Vorrichtung nach Anspruch 1, dadurch gekennzeichnet, daß die Mittel, durch die mit dem Dorn eine Verschiebung bezüglich der Stütze durchführbar ist, durch einen hydraulischen oder pneumatischen Hebebock gebildet sind, dessen Kolben (41) mittels der Betätigungsstange mit dem Dorn verbunden ist und dessen Körper (40) in bezug auf die isolierende, die Stütze verlängernde Hülse festgelegt ist.

8. Vorrichtung nach Anspruch 7, dadurch gekennzeichnet, daß der Hebebock in einem der Sammler (5a, 5b) für das primäre Fluid angeordnet ist, der durch die Umhüllung des Wärmeaustauschers unter der die Rohre tragenden Platte begrenzt ist, wobei die Länge eines jeden der aufeinanderfolgenden Elemente der Hülse oder der Betätigungsstange mit der Höhe des Sammlers verträglich sind.

9. Vorrichtung nach Anspruch 1, dadurch gekennzeichnet, daß die zylinderförmige Hülse (24) aus einem vorzugsweise entfetteten und entrostetem, metallischem Material besteht und auf seiner Außenwandung mit einer elektrolytischen Beschichtung versehen ist, um dadurch die Widerstandsschweißung zu erleichtern.

10. Vorrichtung nach Anspruch 1, dadurch gekennzeichnet, daß die Mittel für das Durchlassen eines elektrischen Stromes zum Anschweißen der zylinderförmigen Hülse an dem Rohr durch einen Stromgenerator gebildet sind, dessen einer Pol mittels der Betätigungsstange mit dem Dorn und dessen anderer Pol über das Rohr und die Rohrplatte an Masse liegt.

11. Vorrichtung nach Anspruch 1, dadurch gekennzeichnet, daß die konischen Scheiben (17) aus Kupfer oder einer Kupferlegierung bestehen und von der Art von Belleville-Scheiben sind und daß die konischen elastischen Teile und die Hülse aus einem einzigen Stück bestehen.

12. Vorrichtung nach Anspruch 1, dadurch gekennzeichnet, daß die isolierenden Plättchen (18), die zwischen den konischen Scheiben angeordnet sind, aus einem oder zwei aneinandergeklebten Teilen bestehen und aus einem Material gebildet sind, welches nicht an den Dorn und/oder die Hülse anschweißbar ist.

13. Vorrichtung nach Anspruch 12, dadurch gekennzeichnet, daß die Plättchen (18) aus einem keramischen Material oder einem mit einer keramischen Schicht bedeckten Metall bestehen.

# FIG.1

FIG. 5

FIG. 2

FIG.4

FIG.3